(19) Europäisches Patentamt

European Patent Office

Office européen des brevets

(11) EP 0 912 358 B1

(12) **EUROPÄISCHE PATENTSCHRIFT**

(45) Veröffentlichungstag und Bekanntmachung des Hinweises auf die Patenterteilung:
**15.12.1999 Patentblatt 1999/50**

(21) Anmeldenummer: **97930517.4**

(22) Anmeldetag: **10.07.1997**

(51) Int. Cl.$^6$: **B60K 6/04**

(86) Internationale Anmeldenummer:
**PCT/EP97/03654**

(87) Internationale Veröffentlichungsnummer:
**WO 98/03364 (29.01.1998 Gazette 1998/04)**

(54) **VERFAHREN ZUM BETRIEB EINES FAHRZEUGS MIT EINER ERSTEN UND EINER ZWEITEN ANTRIEBS-ENERGIEQUELLE**

METHOD OF OPERATING A VEHICLE WITH A FIRST AND A SECOND DRIVE ENERGY SOURCE

PROCEDE D'ACTIONNEMENT D'UN VEHICULE A L'AIDE D'UNE PREMIERE ET D'UNE SECONDE SOURCE D'ENERGIE D'ENTRAINEMENT

(84) Benannte Vertragsstaaten:
**BE DE ES FR GB IT SE**

(30) Priorität: **17.07.1996 DE 19628877**

(43) Veröffentlichungstag der Anmeldung:
**06.05.1999 Patentblatt 1999/18**

(73) Patentinhaber:
**Bayerische Motoren Werke Aktiengesellschaft
80788 München (DE)**

(72) Erfinder:
• **BIDLINGMAIER, Michael**
**D-80637 München (DE)**
• **FISCHER, Gregor**
**D-85737 Ismaning (DE)**

(74) Vertreter: **Bullwein, Fritz et al
Bayerische Motoren Werke Aktiengesellschaft
Patentabteilung AJ-3
80788 München (DE)**

(56) Entgegenhaltungen:
**DE-A- 4 113 386        US-A- 4 021 677
US-A- 5 367 455**

**Beschreibung**

Fahrzeuge sind mit einem Energiespeicher und einem Wandler ausgerüstet, die den aktuellen Energiebedarf für die jeweiligen Fahrzustände bereitstellen. Eine Anordnung gemäß dem Oberbegriffe von Anspruch 1 ist aus der DE-A-4113 386 bekannt, bei der eine Fahrt mit konstanter Geschwindigkeit auf ebener Fahrbahn als gegeben angesehen werden kann.

Der Bedarf, der sich aus der Fahrleistung ergibt, ist zeitlich stark schwankend. Besonders während Beschleunigungsphasen treten sehr hohe Leistungsspitzen auf.

Um dem Nutzer die gewünschten Fahrleistungen zur Verfügung zu stellen, müssen die Komponenten entsprechend dieser Spitzenleistungen ausgelegt werden.

Insbesondere bei Fahrzeugen mit ausschließlichem oder zusätzlichen Elektroantrieb führt dies zu erheblichen Schwierigkeiten bei der Bemessung der Batterien als Energiequelle. Bei konventionellen Fahrzeugen hängt von der Größe des Kraftstofftanks nur die Kapazität ab; sie hat keinen Einfluß auf die Leistung. Bei Batterien hängt die Leistung zusätzlich von der Größe und dem Ladezustand der Batterie ab. Will man Bremsenergie rückgewinnen, tritt dieser Effekt verstärkt auf, da bei einer Bremsung erheblich höhere Leistungen auftreten können. Legt man die Batterie auf die nur kurzfristig erforderlichen Spitzenleistungen aus, so werden diese insbesondere bei Hybridfahrzeugen unverhältnismäßig groß, schwer und teuer. Aus diesem Grunde werden Hochleistungsspeicher als Energiequelle für Fahrzeuganwendungen eingesetzt.

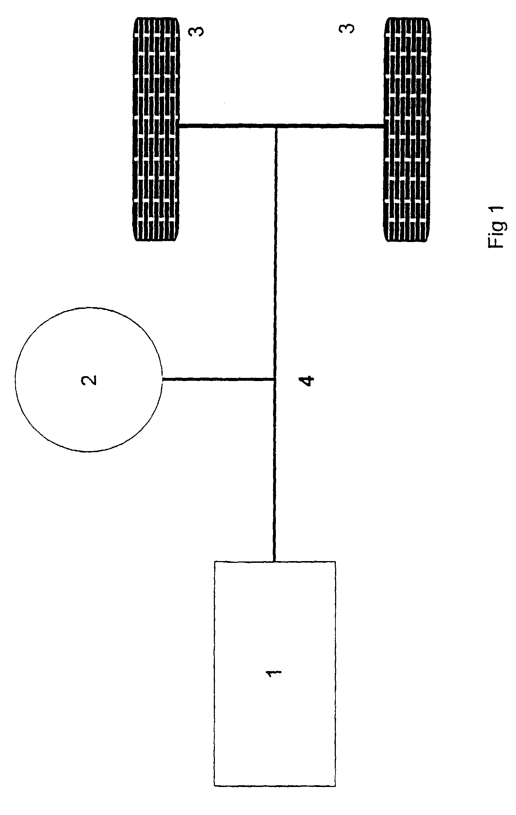

In Fig. 1 ist beispielhaft der Energiefluß eines solches System dargestellt. Ein Speicher mit einem Wandler (1) versorgt über einen Energiepfad (4) die Antriebsräder (3) eines Fahrzeugs. Zusätzlich ist ein Hochleistungs-Energiespeicher mit einem geeigneten Wandler (2) im System vorhanden. Der Hochleistungsspeicher dient dabei in erster Linie dazu, die zusätzliche Leistung aufzubringen, die notwendig ist, das Fahrzeug von einer niedrigen Anfangsgeschwindigkeit auf eine höhere Endgeschwindigkeit zu beschleunigen. Als Hochleistungsspeicher dienen Systeme, die in der Lage sind, hohe Leistungen kurzzeitig abzugeben, jedoch einen begrenzten Speicherinhalt haben. Bekannt sind insbesondere bei elektrischen Systemen Supercapacitors und Kreiselspeicher. Aber auch mechanische Systeme (z.B. Federspeicher) oder hydraulische Systeme (z.B. Druckspeicher) sind bekannt.

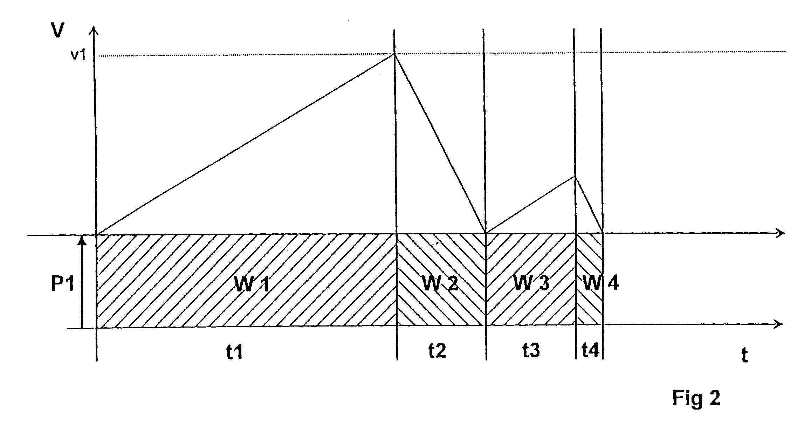

Ohne eine besondere Betriebsstrategie ergeben sich bei extremen Fahrprofilen Schwierigkeiten mit dem Verhalten des Fahrzeugs. Besonders kritisch ist der Fall, wenn ein Fahrer das Fahrzeug erst maximal beschleunigt, danach wieder sehr stark abbremst und dieser Vorgang sich wiederholt. Dieser Vorgang kann bei Beschleunigungsvorgängen in dichtem Verkehr durchaus vorkommen. Die dabei ablaufenden Vorgänge sind in Fig. 2 idealisiert und vereinfacht dargestellt. Der Hochleistungs-Energiespeicher gibt permanent eine maximale Leistung P1 ab, dieser Vorgang läuft über die Zeit t1, Die Fläche (W1) stellt die entnommene Energie dar. Diese ist hier angenommen gleich dem gesamten Energieinhalt des Energiespeichers. Gleichzeitig erhöht sich die Geschwindigkeit v des Fahrzeugs auf die Endgeschwindigkeit v1. Bei einem anschließenden Bremsvorgang während der Zeit t2 wird die Fahrzeuggeschwindigkeit wieder stark reduziert. Die Bremsleistungen sind in der Regel um ein mehrfaches höher, die maximale Leistung des Hochleistungsspeichers und der Antriebsmotoren sind jedoch begrenzt. Aus diesem Grund ist die Leistung P1, mit der die Bremsenergie wieder in den Speicher geladen werden kann, gleich groß wie bei der Beschleunigung. Die Verzögerungszeit t2 ist jedoch wesentlich kürzer als die Beschleunigungszeit t1. Aus diesem Grund kann nur eine wesentlich geringere Energiemenge, die der Fläche (W2) entspricht, wieder in den Speicher geladen werden. Für eine weitere Beschleunigung steht somit lediglich die Energiemenge (W3) zur Verfügung, die gleich groß ist, wie die während des Bremsvorgangs gespeicherte Energiemenge (W2). Mit dieser Energiemenge (W3) kann die ursprüngliche Endgeschwindigkeit v1 nicht mehr erreicht werden. Der Beschleunigungsvorgang wird also mangels Energiereseve abgebrochen. Durch eine Vergrößerung des Energiespeichers läßt sich das Eintreten dieses Effekts verzögern, er tritt dann, je nach Speichergröße, erst bei einem der weiteren Beschleunigungs- Verzögerungszyklen auf, verhindern läßt er sich jedoch nicht.

Der Erfindung liegt die Aufgabe zugrunde, ein Verfahren der eingangs genannten Art zu schaffen, das sich durch ein besonders effizientes Energie-Management auszeichnet.

Die Erfindung löst diese Aufgabe durch die Merkmale des Patentanspruchs 1.

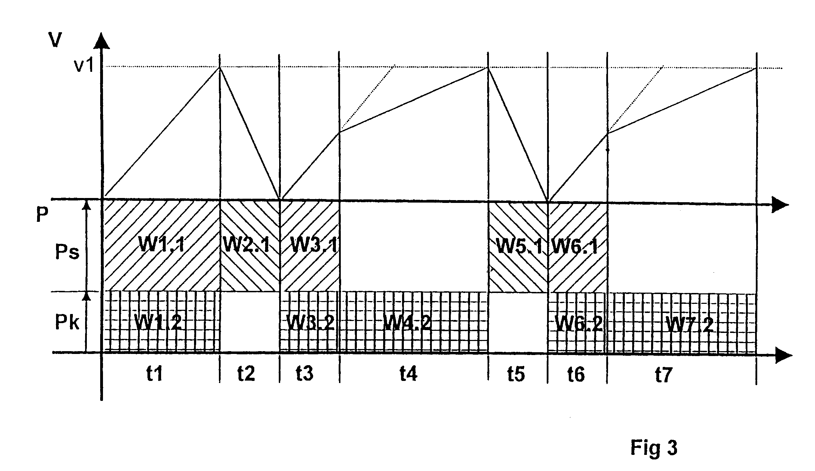

Die erfindungsgemäße Lösung ist anhand von Fig. 3 beschrieben. Es wird aus einer Grund-Energiequelle, z.B. einer Batterie, eine konstante Leistung(Pk) entnommen. Diese reicht aus, das Fahrzeug mit konstanter Geschwindigkeit bei ebener Fahrbahn zu betreiben.

Die für den Beschleunigungsanteil erforderliche Leistung (Ps) wird dem Hochleistungs-Energiespeicher als zweiter Energiequelle entnommen. Entsprechend Fig. 2 wird auch hier während der Zeit t1 eine Beschleunigung ausgeführt und dem Grund-Energiespeicher eine Energiemenge (W1.1) entnommen. Gleichzeitig wird aus dem Hochleistungsenergiespeicher die vorhandene gesamte Energiemenge (W1.2) entnommen. Während der Verzögerungszeit t2 wird wiederum mit der Leistung Ps eine Energiemenge (W2.1) in den Hochleistungs-Energiespeicher zurückgespeichert., die Energiemenge (W2.1) ist jedoch auch hier kleiner als die Energiemenge (W1.1). Bei einer weiter sich anschließenden Beschleunigungsphase kann während der Zeit t3 noch voll beschleunigt werden, bis die Energiemenge (W3.1) des Hochleistungs-Energiespeichers aufgebraucht ist. Während der restlichen Beschleunigungsphase

EP 0 912 358 B1

t4 stehen dann nur noch die Grundielstung Pk zur Verfügung. Folge davon ist, daß die Beschleunigung wesentlich geringer ist als zur Zeit t1. Die Zeit, die notwendig ist, die Endgeschwindigkeit v1 zu erreichen, wird größer und auch die zurückgelegte Wegstrecke wird größer. In der Praxis heißt das, daß das Beschleunigungsverhalten eines Fahrzeugs sich mit der Anzahl der Beschleunigungen und während der Beschleunigungsphasen ändert. Dennoch stellt dies bereits eine erhebliche Verbesserung zum Zustand wie unter Bild 2 dargestellt dar.

Um unabhängig von inneren Verlusten der Energiespeicher sicherzustellen, daß immer eine ausreichende Energie für eine Beschleunigung zur Verfügung steht und auch immer ausreichend Speichervolumen zur Aufnahme der Bremsenergie zur Verfügung steht, ist es vorteilhaft, den Energieinhalt des Hochleistungs-Energiespeichers umgekehrt proportional zur Fahrgeschwindigkeit zu halten. Das heißt zum Beispiel, wenn bei einem Bremsvorgang nicht genügend Energie abgespeichert werden kann, der Hochleistungsspeicher aus der Batterie nachgeladen werden muß. Daraus ergibt sich, daß eine kleine variable Leistung dem Basis-Antriebssystem (1) entnommen wird, die dem Konstantfahrt-Leistungsbedarf entspricht. Die Beschleunigungsenergie wird vom Hochleistungs-Energiespeicher bereitgestellt. Die Auswirkungen auf den Beschleunigungsverlauf entspricht weitgehend dem in Fig. 3 dargestellten Verlauf.

Eine weitere Verbesserung stellt die Betriebsstrategie wie in Bild 4 dargestellt dar. Während der Zeit t1 wird wie in Bild 3 das Fahrzeug beschleunigt, während der sich anschließenden Zeit t2 wieder verzögert. Am Ende der Verzögerung befindet sich die Energiemenge W2.1 im Speicher. Bei einer weiteren Beschleunigung wird jetzt nicht die maximal mögliche Leistung P1 abgegeben, sondern lediglich die verringerte Leistung P1'. Die Leistung P1' ist so bemessen, daß eine konstante Abgabe über die Zeit t3, die notwendig ist, die Maximalgeschwindigkeit zu erreichen, möglich ist. Die Maximalgeschwindigkeit ergibt sich aus dem ersten Beschleunigungsvorgang mit maximal geladenem Hochleistungs-Energiespeicher. Damit ist es möglich, die gesamte Zeit t3 eine konstante Leistung abzugeben. Damit ist sichergestellt, daß zwar eine geringere, jedoch konstante Beschleunigungsleistung zur Verfügung steht. Damit ist der Geschwindigkeitsverlauf zwar flacher, aber kontinuierlich. Bei einer weiteren Beschleuigungsphase während der Zeit t5 ist noch die Energiemenge (W5.1) verfügbar, die der während der Verzögerungsvorgangs eingespeicherten Energiemenge (W4.1) entspricht. Weitere Zyklen laufen demnach gleichartig ab. Bei richtiger Bemessung des Hochleistungs-Energiespeichers ist dann die von Beschleunigungsphase zu Beschleunigungsphase verringerte Beschleunigungsleistung gleich.

Der Fahrer hat somit die Möglichkeit, sich auf diesen Zustand einzustellen, wichtig dabei ist, daß kein abrupter Wechsel der Fahreigenschaften des Fahrzeugs stattfindet. Gleichzeitig ist festzustellen, daß die Wahrscheinlichkeit, daß solche Zyklen tatsächlich vorkommen, mit steigender Zyklenzahl abnehmen. Selbst bei kleinen Pausen zwischen den Zyklen, in denen das Fahrzeug nicht mit maximaler Beschleunigung oder Verzögerung betrieben wird, besteht die Möglichkeit, aus dem Basisantrieb (1) Energie in den Hochleistungs-Energiespeicher zu verlagern, also den Speicher wieder auf einen der Geschwindigkeit entsprechenden Energiezustand zu aufzuladen.

Beim Einsatz eines Hochleistungs-Energiespeichers kann man vorteilhafter Weise davon ausgehen, daß die im Speicher gespeicherte Energiemenge mit steigender Fahrzeuggeschwindigkeit abnimmt. Im weiteren wird davon ausgegangen, daß je nach Speicherbauart eine Offsetmenge Energie gespeichert sein muß, da der Speicher bauartbedingt im Betrieb nicht restlos entleert werden darf, sondem eine nicht nutzbare Restmenge notwendig ist. Diese Offsetmenge ist bei den weiteren Betrachtungen nicht berücksichtigt. Dieser theoretisch vereinfachte Ansatz ist aber in der Praxis nicht ausreichend, insbesondere weil

- Wirkungsgrade in der Energieübertragungsstrecke zu berücksichtigen sind
- während der Speicherung Leerlaufverluste auftreten
- die kinetische Energie als Folge von unterschiedlichen Massen des Fahrzeugs nicht proportional zur Geschwindigkeit ist
- die potentielle Energie bei Steigungsfahrten nicht berücksichtigt wird.

Um die kinetische Energie eines Fahrzeugs in einem Hochleistungs-Energiespeicher speichern zu können, muß der Nutz-Energieinhalt (E nutz) des Speicher wie folgt bemessen werden

$$E \text{ nutz} = \frac{0{,}5 * \text{Fahrzeug-Masse} * (\text{Geschwindigkeit})^2}{\text{Wirkungsgrad Antrieb} * \text{Wirkungsgrad Speicher}}$$

Hierbei ist folgendes zu berücksichtigen:

Fahrzeugmasse: Höchstzulässiges Gesamtgewicht des Fahrzeugs

Geschwindigkeit: Maximalgeschwindigkeit, die mit Hilfe des Speichers erreicht werden soll.

Bei Fahrzeugen, die mit Anhängern betrieben werden, ist die Gesamtmasse des Zuges einzusetzen, bei der Geschwindigkeit, die höchste mögliche oder zulässige Geschwindigkeit des Zuges. Bei Fahrzeugen die sowohl mit als auch ohne Anhänger betrieben werden können ist der größere der beiden Werte einzusetzen.

Die Leistungsauslegung des Hochleistungs-Energiespeichers erfolgt nach den Anforderungen der Beschleunigungsleistung. Die Leistung errechnet sich wie folgt:

Speicherleistung = Maximale Leistung die erforderlich ist, die gewünschten Beschleunigungszeiten zu erreichen minus Leistung bei Konstantfahrt bei maximal erwünschter Geschwindigkeit

Grundsätzlich ist es sinnvoll den Hochleistungs-Energiespeicher so zu betreiben, daß die Gesamtsumme aus kinetischer Energie des Fahrzeugs und der gespeicherten Nutzenergie konstant ist. Setzt man aber bei der Berechnung das höchstzulässige Gesamtgewicht ein, so würde der Speicher in den seltensten Fällen vollständig ausgenutzt. Eine direkte Messung der Fahrzeugmasse im Fahrzeug ist problematisch. Deshalb wird ein indirektes Verfahren vorgeschlagen, das unter Zuhilfenahme eines Neigungssensors die Fahrzeugmasse mit hinreichender Genauigkeit ermitteln läßt. Bei Fahrten in der Ebene läßt sich bei Konstantfahrt der Leistungsbedarf mit bekannten Verfahren ermitteln und die Werte in einem Speicher im Fahrzeug hinterlegen. Aus dem Beschleunigung im Fahrzeug, die einfach ermittelt werden kann und des gemessenen Leistungsbedarf läßt sich mit bekannten Zusammenhängen die Masse ermitteln.

$$Masse = \frac{Beschleunigungsleistung}{Beschleunigung * Geschwindigkeit}$$

Somit läßt sich während der Fahrt die aktuelle Masse hinreichend genau bestimmen.

Bei Fahrtbeginn ist lediglich eine Grobbestimmung der Fahrzeugmasse möglich, aber auch ausreichend. Auf das bekannte Fahrzeugleergewicht werden Festwerte für einzelne Beladungsfälle hinzugerechnet. Die Berücksichtigung der Festwerte kann aus anderen, vorliegenden Signalen abgeleitet werden. So kann der Tankinhalt gemessen und berücksichtigt werden. Pro betätigten Gurtschloß wird ein Festwert von z.B. 50 kg hinzugerechnet, wird die Steckverbindung für einen Anhänger betätigt, wird eine mittlere Anhängelast angenommen. Mit diesen Verfahren läßt sich eine grobe Abschätzung der Fahrzeugmasse beim Start vornehmen. Dieser Startwert geht so lange in die Berechnung ein, bis aus Beschleunigungsmessungen aktuellere Werte gewonnen werden können. Gibt es im Fahrzeug direkte Meßwerte, z.B. aus der Fahrwerkshydraulik, können natürlich diese herangezogen werden.

Die maximale Fahrzeuggeschwindigkeit kann sowohl von Betriebszuständen wie z.B. Elektrobetrieb/Hybridbetrieb als auch von Vorgaben abhängen, wie z.B. von der zulässigen Höchstgeschwindigkeit bei Anhängerbetrieb bestimmt werden.

Aus der aktuell bestimmten Fahrzeugmasse und der Fahrzeuggeschwindigkeit läßt sich eine Funktion der kinetischen Energie über der Fahrgeschwindigkeit ermitteln nach der bekannten Gesetzmäßigkeit

$$E = 0,5 * m*v^2$$

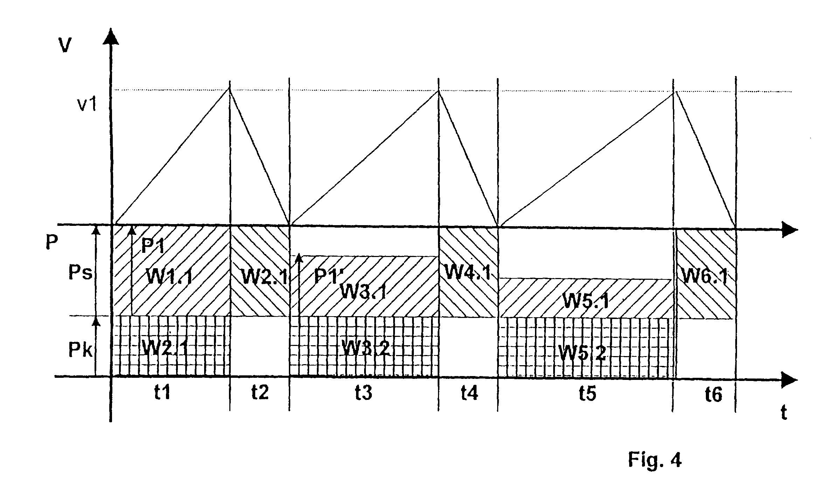

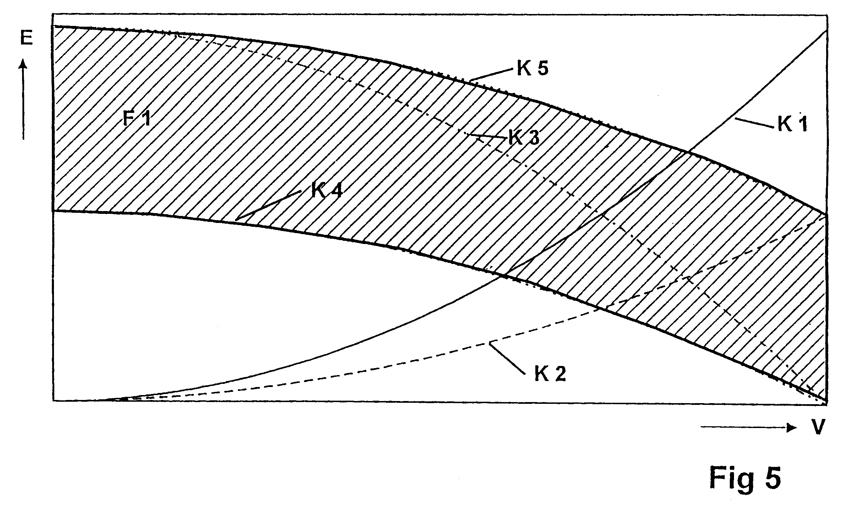

Die Funktion wird begrenzt durch die im jeweiligen Betriebszustand mögliche und zulässige Höchstgeschwindigkeit. In Fig. 5 sind beispielhaft 2 Grenzkurven für die kinetische Energie dargestellt. Kurve K1 stellt den maximalen Beladungsfall dar, Kurve K2 den minimalen Beladungsfall. Als Grundbetriebsstrategie ist es vorteilhaft, wenn man wieder davon ausgeht, daß die Summe der kinetischen Energie im Fahrzeug und der im Hochleistungsspeicher gespeicherten Energie konstant ist. Daraus ergeben sich die ebenfalls in Bild 5 dargestellten Funktionen für den Speicherinhalt aufgetragen über der Fahrzeuggeschwindigkeit. Der Speicherinhalt, der dem Fahrzeugzustand K1 entspricht, ist in Kurve K3 aufgetragen; der Speicherinhalt, der dem Fahrzeugzustand K2 entspricht, ist in Kurve K4 aufgetragen. Es ist erkennbar, daß auslegungsgemäß beim Fahrzeugzustand K1 der Speicherinhalt bei Geschwindigkeit null genau so groß ist wie die kinetische Energie des Fahrzeugs bei maximaler Geschwindigkeit; bei maximaler Fahrzeuggeschwindigkeit jedoch null ist. Beim minimalen Beladungsfall wird der Speicherinhalt nur teilweise ausgenutzt. Dies gilt prinzipiell für alle Beladungsfälle mit Ausnahme des maximalen Beladungsfalls. Daraus läßt sich folgende Betriebsstrategie ableiten:

Der Hochleistungsspeicher wird im Fahrzeug so betrieben, daß der aktuelle nutzbare Speicherinhalt

- mindestens so groß ist wie die im aktuellen Betriebszustand bei maximaler Beladung mögliche kinetische Energie vermindert um die aktuelle kinetische Energie des Fahrzeugs
  (Fig. 5 Kurve K4)
  und
- maximal so groß ist wie der maximal mögliche Energieinhalt des Speichers vermindert um die aktuelle kinetische Energie des Fahrzeugs.
  (Fig. 5 Kurve K5)

Der Betriebsbereich des Hochleistungs-Energiespeichers befindet sich also immer innerhalb der Fläche F1. Mit steigendem Fahrzeuggewicht verringert sich die Fläche, im Grenzfall (maximal zulässiges Höchstgewicht) reduziert sich die Fläche auf die Kurve K3. Bei verminderter zulässiger (z.B. bei Anhängerbetrieb) oder bauartbedingter (z.B. bei reinem Elektrobetrieb von Hybridfahrzeugen) Höchstgeschwindigkeit, wird bei der Berechnung diese verminderte Höchstgeschwindigkeit berücksichtigt.

Solange sich der aktuelle Betriebspunkt des Hochleistungs-Energiespeichers innerhalb der Fläche F1 befindet, ist es nicht notwendig den Speicher aus anderen Quellen nachzuladen, um innere Verluste des Speicher auszugleichen. Liegt dagegen an anderer Stelle im Fahrzeug Energie vor, die sinnvoller Weise abgespeichert werden soll, kann der Speicher bis zur oberen Grenze geladen werden. Eine Überschreitung der Maximalkurve K5 ist nur dann zulässig, wenn die dazu erforderliche Energie als Recuperation aus einem Bremsvorgang des Fahrzeugs zur Verfügung steht oder sonst vernichtet werden müßte.

**Patentansprüche**

1. Verfahren zum Betrieb eines Fahrzeugs mit einer ersten und einer zweiten Antriebs-Energiequelle, aus denen mindestens ein Antriebsaggregat gespeist wird, und bei dem die beim Abbremsen des Fahrzeugs freiwerdende Energie zumindest teilweise in der (den) Energiequelle(n) gespeichert wird,
   dadurch gekennzeichnet,

   daß bei einer Fahrt mit konstanter Geschwindigkeit bei ebener Fahrbahn nur der erste Energiespeicher wirksam ist und der zweite Energiespeicher bei den sonstigen Betriebsfällen aktiviert wird,
   daß der Energievorrat der zweiten Energiequelle bei steigender Fahrzeuggeschwindigkeit entsprechend der Zunahme der kinetischen Energie des Fahrzeugs abnimmt und
   daß die Summe aus der momentanen kinetischen Energie des Fahrzeugs und dem in der zweiten Energiequelle vorhandenen Energievorrat unabhängig von der Fahrzeuggeschwindigkeit konstant ist.

2. Verfahren nach Anspruch 1,
   dadurch gekennzeichnet,

   daß der Speicherinhalt der zweiten Energiequelle unabhängig von der Fahrzeuggeschwindigkeit zwischen zwei Grenzwerten gehalten wird, die einerseits bestimmt wird durch einen oberen und einen unteren Grenzwert, von denen der obere Grenzwert gleich der maximalen kinetischen Energie vermindert um die aktuelle kinetische Energie des Fahrzeugs ist und der untere Grenzwert bestimmt ist durch den maximal möglichen Energieinhalt der zweiten Energiequelle vermindert um die aktuelle kinetische Energie des Fahrzeugs.

3. Verfahren nach Anspruch 2,
   dadurch gekennzeichnet,

   daß bei Unterschreiten des unteren Grenzwerts die zweite Energiequelle aus der ersten Energiequelle und/oder durch die Bremsenergie des Fahrzeugs nachgeladen wird.

4. Verfahren nach einem der Ansprüche 2 oder 3,
   dadurch gekennzeichnet,

   daß bei Überschreiten des oberen Grenzwerts die erste Energiequelle mit der Überschußenergie der zweiten Energiequelle nachgeladen wird.

5. Verfahren nach einem der Ansprüche 1 bis 4,

dadurch gekennzeichnet,

daß für den gewählten Betriebsmodus die zulässige Höchstgeschwindigkeit für die Berechnung der maximalen kinetischen Energie herangezogen wird.

6. Verfahren nach einem der Ansprüche 1 bis 5,
dadurch gekennzeichnet,

daß die aktuelle Fahrzeugmasse bei Fahrbeginn näherungsweise vorgegeben wird.

7. Verfahren nach einem der Ansprüche 1 bis 6,
dadurch gekennzeichnet,

daß die aktuelle Fahrzeugmasse aus Fahrdaten des Fahrzeugs bestimmt wird.

8. Verfahren nach Anspruch 7,
dadurch gekennzeichnet,

daß die aktuelle Masse während des Fahrbetriebs korrigiert wird.

9. Verfahren nach einem der Ansprüche 1 bis 8,
dadurch gekennzeichnet,

daß die Abbremsenergie in die zweite Energiequelle eingegeben wird.

10. Verfahren nach einem der Ansprüche 1 bis 9,
dadurch gekennzeichnet,

daß Hochbeschleunigungen des Fahrzeugs so durchgeführt werden, daß der in der zweiten Energiequelle enthaltene Energievorrat zusammen mit der von der ersten Energiequelle gelieferten Energie das Fahrzeug mit konstanter Beschleunigung auf die Höchstgeschwindigkeit bringt.

**Claims**

1. A method of operating a vehicle comprising a first and a second drive energy source, by means of which at least one drive unit is energised, and wherein the energy liberated on braking the vehicle is at least partly stored in the source or sources of energy,
characterised in that

during travel at constant speed on a level road, only the first energy accumulator is operative whereas the second energy accumulator is activated under different operating conditions,
when the speed of the vehicle increases, the energy accumulated in the second energy source decreases in accordance with the increase in the kinetic energy of the vehicle, and
the sum of the instantaneous kinetic energy of the vehicle and of the energy present in the second energy source is constant, irrespective of the speed of the vehicle.

2. A method according to claim 1, characterised in that the storage content of the second energy source, irrespective of the speed of the vehicle, is kept between two limiting values determined on the one hand by an upper and a lower limiting value, the upper value being equal to the maximum kinetic energy minus the actual kinetic energy of the vehicle and the lower limiting value being determined by the maximum possible energy content of the second energy source minus the actual kinetic energy of the vehicle.

3. A method according to claim 2, characterised in that if the value falls below the lower limiting value, the second energy source is recharged from the first energy source and/or by the energy of the vehicle on braking.

4. A method according to claim 2 or 3, characterised in that if the upper limiting value is exceeded, the first energy source is recharged by the excess energy from the second energy source.

**5.** A method according to any of claims 1 to 4, characterised in that the chosen mode of operation, the permissible maximum speed is used for calculating the maximum kinetic energy.

**6.** A method according to any of claims 1 to 5, characterised in that the actual mass of the vehicle is approximately preset at the beginning of travel.

**7.** A method according to any of claims 1 to 6, characterised in that the actual mass of the vehicle is determined from driving data of the vehicle.

**8.** A method according to claim 7, characterised in that the actual mass is corrected during driving.

**9.** A method according to any of claims 1 to 8, characterised in that the energy on braking is input into the second energy source.

**10.** A method according to any of claims 1 to 9, characterised in that high acceleration of the vehicle is effected in such a manner that the energy accumulated in the second energy source together with the energy delivered by the first energy source brings the vehicle to the maximum speed at constant acceleration.

**Revendications**

**1.** Procédé de mise en oeuvre d'un véhicule comprenant une première et une seconde source d'énergie motrice qui alimente au moins un groupe d'entraînement et qui récupère au moins partiellement dans la ou les sources d'énergie, l'énergie libérée au freinage du véhicule,
caractérisé en ce que

pour un déplacement à vitesse constante sur une trajectoire plane, seul le premier accumulateur d'énergie agit et le second accumulateur d'énergie est activé pour les autres cas de fonctionnement,

-   la réserve d'énergie de la seconde source d'énergie diminue en fonction de l'augmentation de la vitesse du véhicule, selon l'augmentation d'énergie cinétique du véhicule et,
-   la somme de l'énergie cinétique instantanée du véhicule et de la réserve d'énergie existante dans la seconde source d'énergie est constante indépendamment de la vitesse du véhicule.

**2.** Procédé selon la revendication 1,
caractérisé en ce que

le contenu de l'accumulateur de la seconde source d'énergie est tenu indépendamment de la vitesse du véhicule entre deux limites que l'on définit d'une part à l'aide d'une valeur limite supérieure et d'une valeur limite inférieure, la valeur limite supérieure étant égale à l'énergie cinétique maximale diminuée de l'énergie cinétique actuelle du véhicule et la valeur limite inférieure est définie par la capacité d'énergie maximale possible de la seconde source d'énergie diminuée de l'énergie cinétique actuelle du véhicule.

**3.** Procédé selon la revendication 2,
caractérisé en ce qu'

en cas de dépassement vers le bas de la limite inférieure, la seconde source d'énergie est rechargée à partir de la première source d'énergie et/ou par l'énergie de freinage du véhicule.

**4.** Procédé selon l'une des revendications 2 ou 3,
caractérisé en ce qu'

en cas de dépassement de la valeur limite supérieure, on recharge la première source d'énergie avec l'énergie excédentaire de la seconde source d'énergie.

**5.** Procédé selon l'une des revendications 1 à 4,
caractérisé en ce que

pour le mode de fonctionnement choisi, on utilise la vitesse maximale autorisée pour le calcul de l'énergie cinétique maximale.

6. Procédé selon l'une des revendications 1 à 5,
   caractérisé en ce qu'

   on prédétermine par approximation la masse actuelle du véhicule au début du déplacement.

7. Procédé selon l'une des revendications 1 à 6,
   caractérisé en ce qu'

   on définit la masse actuelle du véhicule à partir des données de roulement du véhicule.

8. Procédé selon la revendication 7
   caractérisé en ce qu'

   on corrige la masse actuelle pendant le déplacement.

9. Procédé selon l'une des revendications 1 à 8,
   caractérisé en ce qu'

   on introduit l'énergie de freinage dans la seconde source d'énergie.

10. Procédé selon l'une des revendications 1 à 9,
    caractérisé en ce qu'

    on effectue les accélérations du véhicule de telle façon que la réserve d'énergie de la seconde source d'énergie et de l'énergie fournie par la première source conduise le véhicule à accélération constante jusqu'à la vitesse maximale.

Fig 1

Fig 2

EP 0 912 358 B1

Fig 3

Fig. 4

Fig 5

EP 0 912 358 B1